# FASCICULE DE BREVET EUROPEEN

(11) **EP 1 589 839 B1**
(45) Date de publication et mention de la délivrance du brevet: **07.03.2007**
(21) Numéro de dépôt: 04701370.1
(22) Date de dépôt: 12.01.2004
(51) Int. Cl.: A41D 27/24, A41B 11/14

(54) **PROCÉDÉ D'ASSEMBLAGE BORD À BORD DE DEUX PIÈCES TEXTILES**
VERFAHREN ZUM ZUSAMMENFÜGEN ZWEIER TEXTILSTÜCKE MIT STUMPFSTOSS
METHOD FOR THE BUTT JOINING OF TWO TEXTILE PIECES

(30) Priorité: 27.01.2003 FR 0300864
(43) Date de publication de la demande: 02.11.2005
(73) Titulaire: DBA Lux 1 Sàrl, 2220 Luxembourg (LU)
(72) Inventeur: PERRON, Maurice, F-71400 Autun (FR); NECTOUX, Philippe, F-71190 Laizy (FR); Roy, Pascal, F-71400 Antully (FR)
(74) Mandataire: Bertrand, Didier
(86) Numéro de dépôt international: PCT/FR2004/000043
(87) Numéro de publication internationale: WO 2004/075673

(56) Documents cités:
- EP-A- 0 708 163
- EP-A- 0 721 745
- DE-A- 2 145 511
- US-A- 3 675 247

## Description

La présente invention se rapporte à un procédé d'assemblage à plat bord à bord de deux portions de pièces textiles.

Un domaine d'application envisagé est notamment, mais non exclusivement, celui des sous-vêtements. Ces derniers sont susceptibles d'être réalisés en assemblant plusieurs pièces et en les solidarisant par des coutures qui forment généralement des aspérités. Ces aspérités constituent une gêne pour celui qui porte ledit sous-vêtement et/ou peuvent avoir un effet de relief apparaissant sur les vêtements qui les recouvrent.

On connaît des procédés pour assembler des pièces textiles d'assemblage incluant les caractéristiques de la revendication indépendante 1. Ils consistent à coller bord sur bord lesdites pièces avec des matières plastiques thermofusibles de type polyamide, par exemple, dont les points de fusion sont compatibles avec les résistances thermiques des textiles.

Cependant, le thermocollage des deux bords l'un sur l'autre constitue non seulement une bande collée extrêmement rigide par rapport aux pièces textiles, mais aussi, créer une discontinuité de surface entre les deux pièces puisqu'elles ne sont pas assemblées selon un même plan.

Afin d'y remédier, on a imaginé d'appliquer un ruban collant sur les deux bords en regard de deux pièces textiles de façon à maintenir ensemble lesdites deux pièces selon un même plan. Toutefois, il est mal aisé de maintenir en position fixe les deux bords en regard l'un de l'autre et d'appliquer le ruban collant simultanément sur ces deux bords en les chevauchant l'un et l'autre.

Un objet de la présente invention est alors de proposer un procédé qui permet d'assembler aisément bord à bord deux pièces textiles sans laisser d'aspérités de surface ou de discontinuité de surface entre les deux pièces.

Dans ce but, la présente invention propose un procédé (voir par exemple EP 0 708 163 A) selon lequel, préalablement à la mise en place dudit ruban collant, on colle l'une sur l'autre deux bordures attenantes auxdits bords de façon à maintenir rapprochées lesdits bords, on rase les deux bordures collées au voisinage desdits deux bords rapprochés, on applique ledit ruban collant à cheval sur les deux bords rapprochés et lesdites bordures collées rasées, et on aplatit lors du collage du ruban collant lesdites bordures collées rasées.

Ainsi, une caractéristique de l'invention réside dans le mode d'assemblage préalable des deux pièces textiles bord à bord grâce aux bordures qui les prolongent et qui sont collées ensemble l'une contre l'autre. De la sorte, les bords desdites pièces textiles sont maintenus ensemble et en regard l'un de l'autre, les bordures ayant été rasées au moins partiellement au plus prêt desdits bords rapprochés, sans qu'il y ait besoin de les maintenir dans cette position par d'autres moyens. Après quoi, il est aisé d'appliquer le ruban à cheval sur la bordure collée rasée et sur les bords rapprochés et d'aplatir l'ensemble pour faire disparaître toute aspérité.

Selon un mode de mise en oeuvre de l'invention particulièrement avantageux, on thermocolle les deux bordures attenantes et on utilise un ruban thermocollant pour coller les deux bords, de sorte que lesdites bordures collées rasées sont décollées et aplaties lors du thermocollage du ruban.

Grâce à l'utilisation de colles thermofusibles, d'une part l'assemblage des bordures est réalisé rapidement, et d'autre part les bordures sont susceptibles d'être ajustées avant d'être solidarisées. La colle thermofusible ne présente aucune pégosité à température ambiante, de sorte que les bordures peuvent être positionnées l'une par rapport à l'autre de façon que lesdits bords soient rapprochés l'un de l'autre.

Ensuite, les deux bordures attenantes sont maintenues ensemble et pressées à chaud pendant un court instant de façon à faire fondre l'adhésif. Lorsque la température de l'adhésif diminue, il retrouve son état solide et solidarise ainsi mécaniquement les deux bordures.

En outre, lorsque le ruban thermocollant est appliqué sur bordures collées rasées et pressé à chaud également contre les deux bords, la colle thermofusible qui relie les deux bordures collées rasées tend à fondre une nouvelle fois de sorte qu'elles se désolidarisent l'une de l'autre tandis que lesdits bords sont reliés ensemble selon un même plan par ledit ruban thermocollant. Les bordures sont ainsi aplaties par ledit ruban et aucune aspérité ne fait saillie de la jonction entre les deux pièces textiles.

Selon un mode de réalisation de l'invention particulièrement avantageux, les deux portions de pièces textiles sont en tricot. De la sorte, l'assemblage des pièces en tricot qui est réalisé traditionnellement par couture, et qui forme une aspérité rendant l'ensemble inesthétique et inconfortable, peut être réalisé grâce au procédé ci-dessus décrit. Ainsi, on obtient des pièces en tricot reliées entre elles sans hétérogénéité de surface, ce qui confère à l'ensemble confectionné un certain confort.

Avantageusement, les deux pièces textiles sont réalisées dans un tricot tubulaire, adapté à fabriquer des articles textiles très légers pour lesquels l'assemblage conforme à l'invention et décrit ci-dessus, est parfaitement approprié puisqu'il évite la formation d'aspérité.

Selon un mode préféré de mise en oeuvre, on colle l'une sur l'autre deux pièces textiles, notamment, le long d'une bande de collage, on coupe les deux pièces textiles longitudinalement dans la bande de collage de manière à obtenir deux paires de portions de pièces textiles collées par des bordures constituées par une partie coupée de ladite bande, et on applique le procédé conforme à l'invention et décrit ci-dessus, à au moins une de ces paires de portions de pièces textiles. Comme on l'expliquera plus en détail dans la description détaillée qui va suivre, ce mode préféré de mise en oeuvre de l'invention permet grâce à un nombre limité d'opérations de réaliser l'assemblage de pièces textiles sans former d'aspérité entre elles.

Un mode de réalisation de la présente invention propose un article chaussant du type collant, confectionné à partir de deux tricots tubulaires assemblés par un procédé d'assemblage conforme à l'invention.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique partielle en perspective d'une étape de l'invention, dans lequel deux pièces textiles sont reliées ensemble selon une première étape ;
- la Figure 2 est une vue schématique partielle en perspective illustrant une deuxième étape du procédé d'assemblage conforme à l'invention et illustré sur la Figure 1 ;
- la Figure 3 est une vue schématique partielle en perspective montrant une dernière étape du procédé d'assemblage conforme à l'invention et illustré sur la Figure 2 ;
- la Figure 4 est une vue schématique partielle en perspective illustrant un mode d'assemblage de deux tricots tubulaires conformément à un mode de réalisation de l'invention après une première étape ; et,
- la Figure 5 est une vue schématique partielle en perspective montrant les deux tricots tubulaires, illustré sur la Figure 4, assemblés conformément à un mode de réalisation de l'invention.

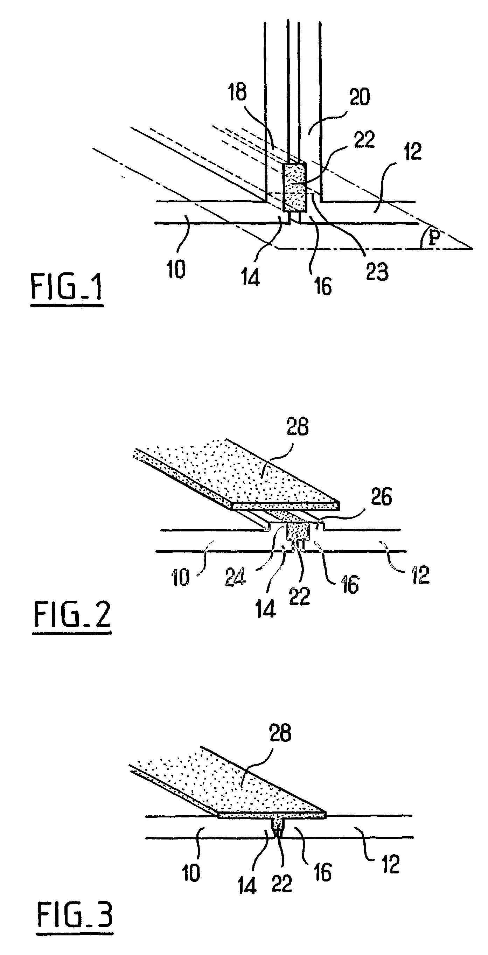

Sur la Figure 1 on a représenté deux portions 10, 12 de pièces textiles dont les bords respectifs 14, 16 sont maintenus rapprochés l'un de l'autre grâce à la liaison des bordures attenantes 18, 20 respectives en regard au moyen d'un adhésif thermofusible 22.

L'adhésif thermofusible 22, initialement sous forme de bande de largeur comprise entre 5 et 20 mm, par exemple 10 mm, est ajusté entre les deux bordures attenantes 18, 20 le long de bords 14, 16. A température ambiante l'adhésif ne présente aucune pégosité et ce n'est qu'après le pressage à chaud des deux bordures attenantes 18, 20, l'une contre l'autre, puis le refroidissement de l'adhésif thermofusible 22 que les deux portions 10, 12 de pièces textiles sont solidaires l'une de l'autre. Bien évidemment, comme l'illustre la Figure 1, l'adhésif 22 en fondant, flue dans les bordures attenantes 18, 20, de sorte que l'adhésif et le textile sont interpénétrés.

Avantageusement, l'adhésif thermofusible est un matériau plastique du type polyuréthanne, lequel est élastiquement déformable. Cependant, d'autres types de matériau tels que les polyamides ou les polyesters sont envisageables.

Après que les deux bordures attenantes 18, 20 ont été collées ensemble, on procède au rasage de ces deux bordures collées selon le plan P illustré sur la Figure 1, qui est sensiblement voisin et parallèle aux surfaces supérieures des portions 10, 12 et dont l'intersection 23 avec les deux bordures attenantes 18, 20 apparaît sur la Figure 1 en traits interrompus.

De la sorte, telles que représentées sur la Figure 2, on obtient les deux portions 10, 12 de pièces textiles maintenues ensemble bord 14 à bord 16 par leurs bordures collées rasées 24, 26. Ces bordures collées rasées 24, 26 qui constituent la jonction entre les deux portions 10, 12 forment une aspérité très faible que l'étape ultérieure va permettre d'éliminer.

Cette étape ultérieure consiste à appliquer à plat, un ruban collant 28, de préférence un ruban thermocollant, longitudinalement à cheval sur les deux bords 14, 16 rapprochés et sur les bordures collées rasées 24, 26.

Lorsque le ruban thermocollant 28 est pressé à chaud contre les bordures collées rasées, 24, 26, les bords du ruban 28 se lient respectivement avec les bords 14 et 16 des deux portions 10, 12 alors que l'adhésif thermofusible 22 qui relie partiellement entre elles les bordures collées rasées 24, 26, fond et les libère l'une de l'autre.

De la sorte, sous l'action du pressage on aplatit les bords 14, 16 qui sont maintenus en regard l'un de l'autre et dans un même plan par le ruban thermocollant 28 qui pénètre dans chacune des portions 10, 12.

Sur la Figure 3, on retrouve ainsi les deux portions 10, 12 solidaires l'une de l'autre grâce au ruban thermocollant 28 qui les relie à cheval sur les deux bords 14, 16 et qui est susceptible de fusionner avec l'adhésif thermocollant 22.

Ainsi, grâce au procédé d'assemblage conforme à l'invention, on obtient deux portions 10, 12 de pièces textiles reliées ensemble selon sensiblement un même plan par un ruban thermocollant qui est au moins partiellement pénétré dans le textile de sorte que la jonction entre les deux pièces ne présente pas d'aspérité.

Avantageusement le ruban thermocollant 28, d'une largeur comprise entre 5 et 25 mm, par exemple 10 mm, est en polyuréthanne thermofusible adapté à être collé à une température de 220°C pendant 20 secondes sous presse à plateau par exemple. Le polyuréthanne présente l'avantage d'être élastiquement déformable de sorte qu'il ne confère qu'une faible discontinuité des propriétés mécaniques entre les deux portions 10, 12 des pièces textiles.

En revanche, lorsque les textiles sont des tricots, lesquels sont également élastiquement déformables, la discontinuité mécanique entre deux portions assemblées est encore amoindrie.

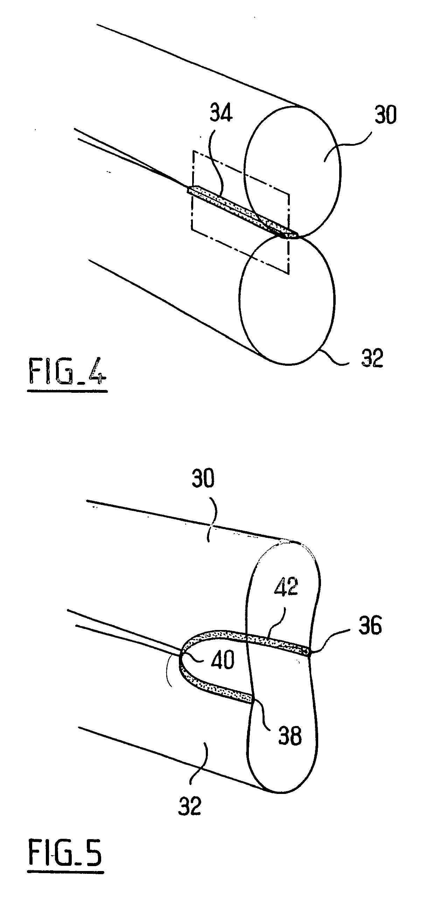

Le procédé d'assemblage conforme à l'invention a été appliqué à la réalisation des collants à partir de deux tricots tubulaires correspondant aux jambes et que l'on décrira en référence aux Figures 4 et 5. En outre, on utilise une bande d'adhésif thermocollant présentant deux faces opposées susceptibles d'êtres activées à une température comprise entre 180 et 220°C, par exemple 200°C, l'une de ces faces étant recouverte par une bande cartonnée, l'autre étant libre. Avantageusement, les faces de la bande d'adhésif thermocollant sont imprégnées d'un second adhésif, qui lui, est thermo-réticulable à une température supérieure à 200°C, par exemple 220°C. De la sorte, la bande d'adhésif thermocollant est susceptible d'être appliquée, dans une première étape, la face libre contre le premier tricot à une température de 200°C pour y être reliée ; et dans une seconde étape, après que la bande cartonnée a été retirée, le second tricot est susceptible d'être appliqué contre la bande d'adhésif thermocollant pour être relié au premier tricot en pressant l'ensemble à une température de 220°C. Ainsi, non seulement l'autre face de la bande d'adhésif adhère au second tricot, mais le second adhésif thermo-réticulable qui n'avait pas été activé lors de la première étape, l'est dans la seconde étape et renforce la liaison entre les deux tricots.

Sur la Figure 4 une première pièce textile 30, constituée d'un tricot tubulaire présentant une ouverture, est disposée au-dessus d'une seconde pièce textile 32 identique.

Tout d'abord, une bande d'adhésif thermocollant 34 supportée par une bande cartonnée est appliquée longitudinalement, l'adhésif contre la paroi externe du second tricot tubulaire 32 et à partir de l'ouverture sur une portion dénommée cheminée. Cette portion longitudinale constitue un repère et elle est généralement renforcée.

La longueur de cette bande d'adhésif thermocollant 34 correspondant sensiblement à la longueur de ladite cheminée, est choisie de manière à réaliser la portion formant slip du collant.

Après que la bande d'adhésif thermocollant 34 a été appliquée contre le second tricot tubulaire 32, l'ensemble est pressé à chaud de façon à solidariser l'une des faces de la bande d'adhésif thermocollant 34 audit second tricot tubulaire 32, ladite bande cartonnée permettant d'éviter que l'autre face de la bande d'adhésif thermocollant 34, n'adhère aux moyens de pressage.

Ensuite, ladite bande cartonnée est retirée et la première pièce textile 30 constituée également d'un tricot tubulaire est appliquée symétriquement contre le second tricot tubulaire 32, cheminée contre cheminée, la bande d'adhésif thermocollant 34, étant située entre les deux tricots tubulaires 30, 32.

Ainsi, en pressant ensemble à chaud les deux portions de tricot tubulaire constituées des cheminées, la bande d'adhésif thermocollant 34 fond puis se solidifie en refroidissant lorsque le pressage cesse. Les deux tricots tubulaires 30, 32 sont alors reliés ensemble longitudinalement, leur paroi externe l'une contre l'autre, cheminée contre cheminée, par ladite bande d'adhésif thermocollant 34. Les deux bords opposés desdites cheminées collées sont respectivement longés chacun, par deux bords de portions de tricots tubulaires, rapprochés l'un de l'autre, lesdits deux bords correspondant aux deux bords 14, 16 illustrés sur la Figure 1.

On fend ensuite les deux cheminées collées l'une contre l'autre de façon à obtenir deux paires de demi-cheminées collées ensemble, chacune par une demi bande d'adhésif thermocollant 34.

De la sorte, telles que représentées sur la Figure 5, les deux paires de demi-cheminées, présentent deux premières extrémités disjointes 36, 38, situées au bord des ouvertures respectives des deux tricots tubulaires 30, 32 et deux extrémités qui se rejoignent à la jointure 40 des deux tricots tubulaires 30, 32. Les deux premières extrémités disjointes 36, 38 seront situés respectivement dans les parties avant et arrière du collant ou inversement.

Les deux paires de demi-cheminées collées ensemble correspondent aux bordures attenantes 18, 20, illustrées sur la Figure 1 et collées ensemble par l'adhésif thermofusible 22.

De la même façon, on procède alors au rasage des deux paires de demi-cheminées collées jusqu'au voisinage desdits deux bords de portions de tricots tubulaires rapprochés, puis on applique un ruban thermocollant 42 sur les paires de demi-cheminées collées rasées que l'on presse à chaud. Ainsi, on relie lesdits deux bords de portions de tricots tubulaires rapprochés, sans hétérogénéité de surface entre les portions. De la sorte, on obtient des collants sans couture dont la liaison entre les deux tricots tubulaires ne forme aucune aspérité.

Le procédé d'assemblage conforme à l'invention est susceptible d'être appliqué à d'autres types de produits textiles qu'ils soient obtenus sur métier à tricoter circulaire ou sur métier à tisser ou même, qu'ils soient non-tissés.

Par exemple, les jarretières sont susceptibles d'être appliquées et reliées au bas grâce au procédé conforme à l'invention. Il en est de même pour les bords côte sur jambières ou de la réalisation des mi-bas, des socquettes des brassières ou des soutiens-gorge.

Le procédé conforme à l'invention est parfaitement adapté à l'assemblage de tricots tubulaires symétriques destinés à être fendus pour former une première partie, en regard de la fente, adaptée à recouvrir une portion de tronc et deux secondes parties correspondant à la portion tubulaire intacte des tricots et adaptés à recouvrir les deux membres, inférieurs ou supérieurs.

C'est par exemple le cas des slips, des caracos ou des chemises.

## Revendications

1. Procédé d'assemblage à plat bord à bord de deux portions (10, 12) de pièces textiles au moyen d'un ruban collant (28) chevauchant l'un et l'autre bords (14, 16), **caractérisé en ce que** préalablement à la mise en place dudit ruban collant (28), on colle l'une sur l'autre deux bordures attenantes (18, 20) auxdits bords (14, 16) de façon à maintenir rapprochées lesdits bords (14, 16), **en ce qu'**on rase les deux bordures collées au voisinage desdits deux bords (14, 16) rapprochés, **en ce qu'**on applique ledit ruban collant (28) à cheval sur les deux bords (14, 16) rapprochés et lesdites bordures collées rasées (24, 26), et **en ce qu'**on aplatit lors du collage du ruban collant (28) lesdites bordures collées rasées (24, 26).

2. Procédé d'assemblage selon la revendication 1, **caractérisé en ce que** pour ledit collage l'une sur l'autre de dites deux bordures attenantes, on thermocolle les deux bordures attenantes (18, 20) et **en ce que** pour ladite application dudit ruban, on utilise un ruban thermocollant (28) pour coller les deux bords (14, 16), de sorte que lesdites bordures collées rasées (24, 26) sont décollées et aplaties lors du thermocollage du ruban thermocollant (28).

3. Procédé d'assemblage selon la revendication 1 ou 2, **caractérisé en ce que** les deux portions (10, 12) de pièces textiles sont en tricot.

4. Procédé d'assemblage selon la revendication 3, **caractérisé en ce que** les deux pièces textiles sont réalisées dans un tricot tubulaire (30, 32).

5. Procédé d'assemblage selon l'une quelconque des revendications 1 à 4, **caractérisé en ce qu'**on colle l'une sur l'autre deux pièces textiles le long d'une bande de collage (34), **en ce qu'**on coupe les deux pièces textiles longitudinalement dans la bande de collage (34) de manière à obtenir deux paires de portions (10, 12) de pièces textiles collées par des bordures constituées par une partie coupée de ladite bande, et **en ce qu'**on applique le procédé selon la revendication 1 ou 2 à au moins une de ces paires de portions de pièces textiles.

6. Procédé d'assemblage selon la revendication 4, **caractérisé en ce qu'**on colle longitudinalement, l'un sur l'autre les deux tricots tubulaires le long d'une bande de collage (34), **en ce qu'**on coupe les deux tricots tubulaires longitudinalement dans la bande de collage de manière à obtenir deux paires de portions de tricots tubulaires collées par des bordures constituées par une partie coupée de ladite bande, et **en ce qu'**on applique le procédé selon la revendication 1 ou 2 aux deux paires de portions de tricots tubulaires.

7. Article chaussant du type collant, confectionné à partir de deux tricots tubulaires (30, 32) adaptés à être appliqués l'un sur l'autre symétriquement, **caractérisé en ce que** lesdits deux tricots tubulaires sont assemblés par un procédé d'assemblage selon l'une quelconque des revendications 1 à 6.

## Claims

1. Process for flat edge-to-edge assembly of two portions (10,12) of textile parts by means of a gluing ribbon (28) overlapping the two edges (14,16), **characterised in that**, before the said gluing ribbon (28) is put into place, two borders (18, 20) adjacent to the said edges (14, 16) are glued onto each other, so as to hold the said edges (14, 16) close to each other, **in that** the two borders close to the said two edges (14, 16) are shorn, **in that** the said gluing ribbon (28) is applied overlapping the two edges (14, 16) brought together and the said shorn glued borders (24 26), and the said shorn glued borders (24, 26) are flattened when applying the gluing ribbon (28).

2. Assembly process according to claim 1, **characterised in that**, for gluing the two adjacent borders onto each other, the two adjacent borders (18, 20) are thermoglued and a heat-reactivatable ribbon (28) is used to glue the two edges (14, 16), such that the said shorn glued borders (24, 26) are unglued and flattened when the heat-reactivatable ribbon (28) is thermoglued.

3. Assembly process according to claim 1 or 2, **characterised in that** the two portions (10,12) of textile parts are made of knit fabric.

4. Assembly process according to claim 3, **characterised in that** the two textile parts are made from a tubular knit (30, 32).

5. Assembly process according to any one of claims 1 to 4, **characterised in that** two textile parts are glued to each other, particularly along a gluing strip (34), the two textile parts are cut longitudinally in the gluing strip (34) to obtain two pairs of portions (10,12) of textile parts glued by borders composed of a cut part of the said strip, and **in that** the process according to claim 1 or 2 is applied to at least one of these pairs of portions of textile parts.

6. Assembly process according to claim 4, **characterised in that** two tubular knits are glued to each other along a gluing strip (34), **in that** the tubular knits are cut longitudinally in the gluing strip to obtain two pairs of portions of tubular knits glued by borders composed of a cut part of the said strip, and **in that** the process according to claim 1 or 2 is applied to the two pairs of portions of tubular knits.

7. Leg wear such as tights, made up from two tubular knits (30,32) assembled by an assembly process according to any one of claims 1 to 6.

## Patentansprüche

1. Verfahren zum Zusammenfügen zweier Abschnitte (10, 12) von Textilstücken mit Stumpfstoß mittels eines Klebebands (28), das die eine und andere Kante (14, 16) überlappt bzw. überdeckt, **dadurch gekennzeichnet, dass** vor Anbringen des Klebebands (28) zwei an die Kanten (14, 16) angrenzende Ränder (18, 20) aufeinandergeklebt werden, um die Kanten (14, 16) nahe beieinander zu halten, dass die beiden zusammengeklebten Ränder in der Nähe der beiden nahe beieinander liegenden Kanten (14, 16) geschert werden, dass das Klebeband (28) rittlings auf die beiden nahe beieinander liegenden Kanten (14, 16) und die zusammengeklebten gescherten Ränder (24, 26) aufgebracht wird, und dass während des Anklebens des Klebebands (28) die zusammengeklebten gescherten Ränder (24, 26) abgeflacht werden.

2. Verfahren zum Zusammenfügen nach Anspruch 1, **dadurch gekennzeichnet, dass**, um die beiden angrenzenden Ränder aufeinander zu kleben, die beiden angrenzenden Ränder (18, 20) heißgeklebt werden und dass zwecks Anbringens des Bandes ein heißklebendes Band (28) benutzt wird, um die beiden Kanten (14, 16) zu kleben, so dass die zusammengeklebten gescherten Ränder (24, 26) während des Heißklebens des heißklebenden Bandes (28) gelöst und abgeflacht werden.

3. Verfahren zum Zusammenfügen nach Anspruch 1 oder 2, **dadurch gekennzeichnet, dass** die beiden Abschnitte (10, 12) von Textilstücken aus Gewirke bzw. Strick sind.

4. Verfahren zum Zusammenfügen nach Anspruch 3, **dadurch gekennzeichnet, dass** die beiden Textilstücke in einem röhrenförmigen Gewirke (30, 32) realisiert sind.

5. Verfahren zum Zusammenfügen nach einem der Ansprüche 1 bis 4, **dadurch gekennzeichnet, dass** zwei Textilstücke entlang einem Klebstreifen (34) aufeinandergeklebt werden, dass die beiden Textilstücke der Länge nach im Klebstreifen (34) zugeschnitten werden, um zwei Paare von Abschnitten (10, 12) von Textilstücken zu erhalten, die mittels Rändern zusammengeklebt sind, die von einem zugeschnittenen Teil des Streifens gebildet werden, und dass das Verfahren nach Anspruch 1 oder 2 auf mindestens eines dieser Paare von Abschnitten von Textilstücken angewandt wird.

6. Verfahren zum Zusammenfügen nach Anspruch 4, **dadurch gekennzeichnet, dass** die beiden röhrenförmigen Gewirke der Länge nach entlang einem Klebstreifen (34) aufeinander geklebt werden, dass die beiden röhrenförmigen Gewirke in Längsrichtung im Klebstreifen zugeschnitten werden, um zwei Paare von Abschnitten von röhrenförmigen Gewirken zu erhalten, die mittels Rändern zusammengeklebt sind, die durch einen zugeschnittenen Teil des Streifens gebildet werden, und dass das Verfahren nach Anspruch 1 oder 2 auf die beiden Paare von Abschnitten von röhrenförmigen Gewirken angewandt wird.

7. Fußbekleidungsartikel vom Strumpfhosentyp, hergestellt ausgehend von zwei röhrenförmigen Gewirken (30, 32), die so angepasst sind, dass sie symmetrisch übereinandergelegt werden können, **dadurch gekennzeichnet, dass** die beiden röhrenförmigen Gewirke durch ein Verfahren zum Zusammenfügen nach einem der Ansprüche 1 bis 6 zusammengefügt sind.
